**Europäisches Patentamt**

**European Patent Office**

**Office européen des brevets**

(19)

(11) Veröffentlichungsnummer : **0 343 356 B1**

(12) # EUROPÄISCHE PATENTSCHRIFT

(45) Veröffentlichungstag der Patentschrift :
**25.03.92 Patentblatt 92/13**

(51) Int. Cl.$^5$ : **E04H 5/04**

(21) Anmeldenummer : **89106377.8**

(22) Anmeldetag : **11.04.89**

(54) **Netzstation oder dergleichen mit Be- und Entlüftungsöffnungen für einen Lüftungsstrom.**

(30) Priorität : **13.04.88 DE 8804820 U**

(43) Veröffentlichungstag der Anmeldung :
**29.11.89 Patentblatt 89/48**

(45) Bekanntmachung des Hinweises auf die
Patenterteilung :
**25.03.92 Patentblatt 92/13**

(84) Benannte Vertragsstaaten :
**AT BE CH DE FR IT LI NL**

(56) Entgegenhaltungen :
**DE-A- 2 706 958**
**DE-B- 1 559 144**
**DE-U- 7 401 064**
**DE-U- 7 607 474**
**FR-A- 2 515 717**

(73) Patentinhaber : **Betonbau GmbH**
**Schwetzinger Strasse 22-26**
**W-6833 Waghäusel-Kirrlach (DE)**

(72) Erfinder : **Brammer, Fritz, Dipl.-Ing.**
**Alte Darmstädter Strasse 26**
**W-6101 Nieder-Ramstadt (DE)**
Erfinder : **Olt, Georg, Dipl.-Ing.**
**Hölderlinweg 10**
**W-6100 Darmstadt (DE)**
Erfinder : **Kaute, Christoph, Dipl.-Ing.**
**Enzstrasse 9 b**
**W-7514 Eggenstein-Leopoldshafen (DE)**
Erfinder : **Kraemer, Karl Heinrich**
**Schloss Wolfsbrunnenweg 54**
**W-6900 Heidelberg (DE)**
Erfinder : **Illo-Frank, Primus, Dr. Dipl.-Ing.**
**Im Rennich 10**
**W-7500 Karlruhe 41 (DE)**

(74) Vertreter : **Hiebsch, Gerhard F., Dipl.-Ing. et al**
**Hiebsch & Peege Patentanwälte Postfach 464**
**Erzbergerstrasse 5a**
**W-7700 Singen 1 (DE)**

EP 0 343 356 B1

## Beschreibung

Die Erfindung betrifft eine Netzstation aus einem Betonkörper mit einer sowohl im oberen als auch im unteren Bereich Be- und Entlüftungsöffnungen für einen Lüftungsstrom aufweisenden Tür sowie mit zumindest einem in ihrem Innenraum türnah angeordneten Spannungsschalter, hinter dem wenigstens ein Transformator aufgesetzt ist.

Bei der Luftführung in Netzstationen ist es wichtig, die kalte Zuluft zuerst zum Transformator zu führen und dann zu den Mittel- und Niederspannungsschaltgeräten, nach denen die Abluft abgeleitet werden soll. Ein Zuluftschacht ist teuer, vergrößert den Grundrißbedarf der Netzstation und bildet eine ständige Gefahr für Wassereintritt in die Netzstation.

Bei bedienungsfreundlichen Netzstationen sind die Mittel- und Niederspannungsschaltgeräte im vorderen Raum, also in der Nähe der Tür angeordnet, während der Transformator im hinteren Raum des Stationsgebäudes steht und damit am weitesten entfernt von Belüftungsöffnungen, wenn diese ausschließlich an der Frontseite der Netzstation angeordnet sind.

Eine Netzstation der eingangs erwähnten Art zeigt DE-B-1 559 144 anhand einer aus zwei formgleichen Betonrinnen gefertigten Transformatorenstation. In diesem Gebilde ist durch zwei Türen eine Zelle für die Spannungsschalter und den Transformator abgegrenzt, die Luftströmungen ziehen von Belüftungsschlitzen der einen Tür durch die andere Tür ab. Eine solche Luftführung ist bei monolythischen Netzstationen mit einer einzigen Tür, welche bevorzugt teilweise in das Erdreich abgesenkt werden, nicht sinnvoll, was auch für die Schrift nach DE-U-7 401 064 zutrifft; dort sind die Mittel- und Niederspannungsteile abgekapselt, der Transformator wird durch gegenüberliegende Öffnungen mit Umluft versorgt.

In Kenntnis dieses Standes der Technik hat sich der Erfinder das Ziel gesetzt, bei Netzstationen der eingangs erwähnten Art die Führung des Zuluftstromes zu verbessern und vor allem für teilweise eingegrabene Netzstationen mit dreiseitig geschlossenen Wänden eine gute Durchlüftung anzubieten.

Zur Lösung dieser Aufgabe führt die Lehre nach dem Patentanspruch 1; der Spannungsschalter ist in Abstand zum Boden der Netzstation angeordnet und ihm gegenüber die Tür angebracht, in der die Be- und Entlüftungsöffnungen ausschließlich angeordnet sind, wobei die Lüftungsführung innerhalb der Netzstation von einer Haube bestimmt wird, die zwischen der/den im unteren Bereich der Tür angeordneten Belüftungsöffnungen und den im oberen Bereich angeordneten Entlüftungsöffnungen an der Tür angebracht ist und eine Strömungsbahn für den Lüftungsstrom bildet, der zuerst unter dem Spannungsschalter zum Transformator und dann an ihm vorbei zu den Entlüftungsöffnungen geleitet ist. Dabei hat es sich als günstig erwiesen, die Haube, die Belüftungsöffnung/en überspannen zu lassen und ihre nach unten weisende Haubenöffnung von den Spannungsschaltern durch Leiteinrichtungen zu trennen, bevorzugt durch ein Zwischenblech.

Weitere vorteilhafte Ausgestaltungen sind den Unteransprüchen zu entnehmen.

Die leicht einsetzbare Haube leitet den Zuluftstrom von der Belüftungsöffnung und den Schaltgeräten direkt zum Transformator, von wo aus sie -- über der Haube und an den Schaltgeräten entlangstreichen -- zur Ablufttöffnung in der Tür des Stationsgebäudes gelangen kann. Die einfache Lösung eignet sich insbesondere zum Einbau in Kompaktstationen, ist aber auch für solch eine Station geeignet, deren Be- und Entlüftungsöffnungen ausschließlich in der Tür des Gebäudes angebracht sind.

Die Haube besteht zweckmäßigerweise aus dünnem Blech und weist bevorzugt ringsum eine Abkantung auf, welche die Steifigkeit der Haube wesentlich erhöht.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1: die Frontansicht einer Kompaktstation mit einer Haube zur Führung eines Lüftungsstromes;

Fig. 2: einen Querschnitt durch die Kompaktstation nach Fig. 1 und

Fig. 3: eine Schrägsicht auf eine andere Ausführung der Haube.

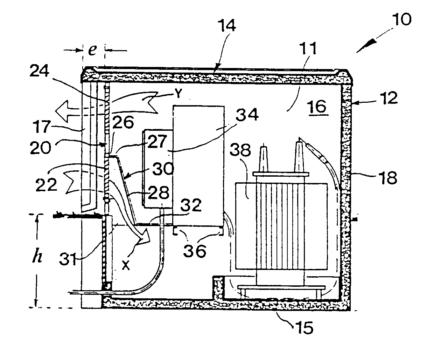

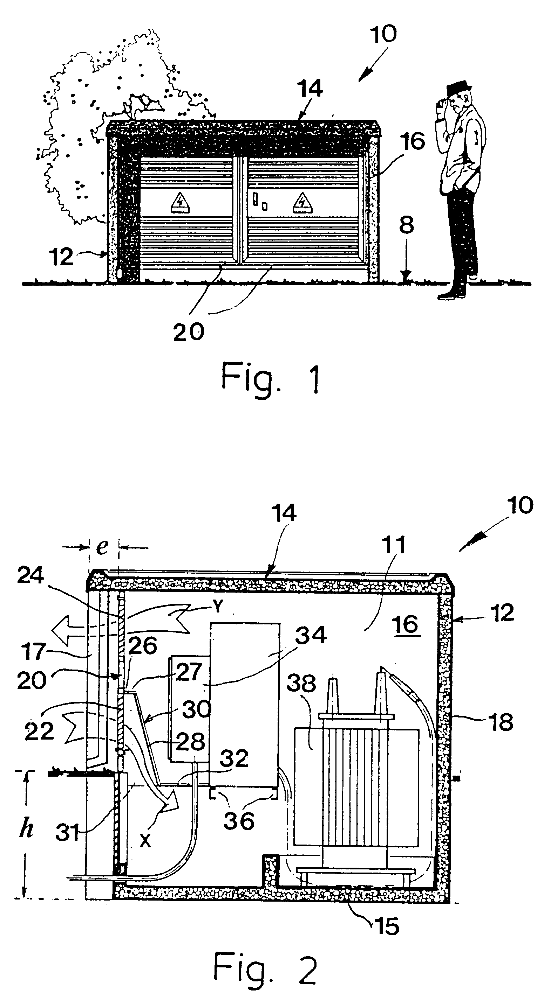

Eine Kompaktstation 10 aus einem monolithisch gegossenen Betonkörper 12 und aufgesetzter Dachplatte 14 ist mit einem Abstand h ihres Bodens 15 zur umgebenden Rasensohle 8 unter diese abgesenkt. An der in Fig. 1 erkennbaren Frontseite der Kompaktstation 10 sind in jenen Betonkörper 12 oberhalb der Rasensohle 8 Türen 20 so eingesetzt, daß die Seitenwände 16 des Betonkörpers 12 die Türen 20 übergreifende Lisenen 17 der Tiefe e bilden.

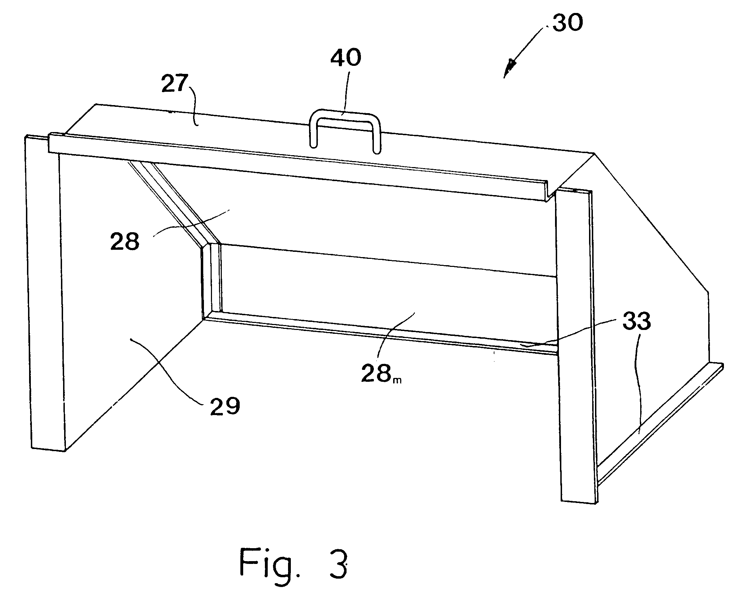

Im unteren Bereich der Tür 20 sind Belüftungsöffnungen 22 und in deren oberen Bereich Entlüftungsöffnungen 24 angeordnet. Zwischen diesen Belüftungsöffnungen 22 und Entlüftungsöffnungen 24 ist an der Innenseite der Tür 20 bei 26 eine Haube 30 angelenkt, die mit einem Firststreifen 27 und anschließender Leitwand 28 sowie zwei Seitenwänden 29 aus Blech hergestellt ist. Die in Einbaulage nach Fig. 3 schräg verlaufende Leitwand 28 kann durch einen vertikalen Sockelstreifen $28_m$ verlängert sein.

Die Haube 30 überspannt die Belüftungsöffnungen 22 so, daß die Haubenöffnung 31 abwärts und ihre Leitwand 28 zu Schaltgeräten 34 weist. Somit ist die Zuluft gezwungen, den mit Pfeil x angedeuteten Weg unter den auf Trägern 36 stehenden Schaltgeräten 34 zu einem im Innenraum 11 der Kompaktstation 10 an deren Rückwand 18 aufgestellten Transformator 38 zu nehmen. Dies kann durch ein zusätzliches horizontales Zwischenblech 32 unterstützt werden, welches sich von der Haube 30 zu einem der Träger 36 spannt. Mit 33 sind abgekantete Randstreifen der Haube 30 bezeichnet.

Die vorgezogenen Lisenen 17 verbessern den Luftzug x,y vor den Türen 20 und verhindern zudem einen unerwünschten Zugriff einer Säge od. dgl. Werkzeug zu den an den Seitenwänden 16 angeordneten -- aus Gründen der Übersicht nicht dargestellten -- Türscharnieren.

Die kalte Zuluft kühlt den Transformator 38 und steigt an ihm als erwärmte Abluft nach oben, streicht über der Haube 30 an den Schaltgeräten 34 entlang zu den Entlüftungsöffnungen 24 und gelangt durch diese -- entsprechend Pfeil y -- nach außen.

Die Haube 30 kann bei einem anderen Ausführungsbeispiel -- statt angelenkt -- an der Innenseite der Tür 20 auch in diese eingehängt oder mit ihr verschraubt werden. Sie kann aber auch an den Trägern 36 der Schaltgeräte 34 befestigt werden.

Die Form der Haube 30 ist aber stets so gestaltet, daß der freie Querschnitt des Lüftungsweges an jeder Stelle mindestens demjenigen der Belüftungsöffnung 22 entspricht.

Ist die Haube 30 beim Zutritt zu den Schaltgeräten 34 im Wege, so läßt sie sich beim Beispiel der Fig. 3 an einem Griff 40 fassen und leicht entfernen, zur Seite legen und wieder einrastend anbringen.

## Patentansprüche

1. Netzstation aus einem Betonkörper mit einer sowohl im oberen als auch im unteren Bereich Be- und Entlüftungsöffnungen für einen Lüftungssstrom aufweisenden Tür sowie zumindest einem in ihrem Innenraum türnah angeordnetem Spannungsschalter, hinter dem wenigstens ein Transformator aufgesetzt ist,
dadurch gekennzeichnet,
daß der Spannungsschalter (34) in Abstand (h) zum Boden (15) der Netzstation (10) und ihm gegenüber die Tür (20) angebracht ist, in der die Be- und Entlüftungsöffnungen (22, 24) ausschließlich angeordnet sind, daß die Lüftungsführung innerhalb der Netzstation (10) von einer Haube (30) bestimmt ist, die zwischen der/den im unteren Bereich der Tür (20) angeordneten Belüftungsöffnung/en (22) und der/den im oberen Bereich angeordneten Entlüftungsöffnung/en (24) an der Tür (20) angebracht ist und eine Strömungsbahn für den Lüftungsstrom (x, y) bildet, der zuerst unter dem Spannungsschalter (34) zum Transformator (38) und dann über den/die Spannungsschalter (34) zu der/den Entlüftungsöffnung/en (24) geleitet ist.

2. Netzstation nach Anspruch 1, dadurch gekennzeichnet, daß die Haube (30) die Belüftungsöffnung/en (22) überspannt und ihre untere Haubenöffnung (31) von den Spannungsschaltern (34) durch Leiteinrichtungen (28, 28$_a$; 32) getrennt ist.

3. Netzstation nach Anspruch 1 oder 2, dadurch gekennzeichnet, daß die Haube (30) eine durch einen Firststreifen (27) in Abstand zu der/den Belüftungsöffnung/en (22) gehaltene Leitwand (28) sowie an diese ansetzende Seitenwände (29) aufweist.

4. Netzstation nach einem der Ansprüche 1 bis 3, dadurch gekennzeichnet, daß die Haube (30) aus dünnwandigem Blech besteht und ringsum eine Abkantung (33) aufweist.

5. Netzstation nach einem der Ansprüche 2 bis 4, dadurch gekennzeichnet, daß als Leiteinrichtung ein Zwischenblech (32) von der unteren Haubenöffnung (31) zum Transformator (38) hin gerichtet ist.

6. Netzstation nach einem der Ansprüche 1 bis 5, dadurch gekennzeichnet, daß der von der Haube (30) bestimmte freie Querschnitt des Lüftungsweges an jeder Stelle mindestens demjenigen der Belüftungsöffnung/en (22) entspricht.

7. Netzstation nach wenigstens einem der Ansprüche 1 bis 6, dadurch gekennzeichnet, daß die Haube (30) an der Tür (20) angelenkt ist.

8. Netzstation nach wenigstens einem der Ansprüche 1 bis 6, dadurch gekennzeichnet, daß die Haube (30) lösbar an der Tür (20) oder an Trägern (36) für die Spannungsschalter (34) einhängbar oder durch Flügelmuttern befestigbar ist.

9. Netzstation nach wenigstens einem der Ansprüche 1 bis 8, dadurch gekennzeichnet, daß der Transformator (38) tiefer als der/die Spannungsschalter (34) angeordnet ist.

## Claims

1. Transformer station consisting of a concrete body comprising in both the upper and the lower region ventilation openings for a door having an air current and at least one switchgear arranged close to the door in its inner space, behind which at least one transformer is placed,
characterised in that
the switchgear (34) is mounted at a distance (h) from the base (15) of the transformer station (10) and the door (20) in which the ventilation openings (22, 24) are exclusively arranged is arranged opposite said switchgear, that the air is guided within the transformer station (10) by means of a hood (30), which is mounted on the door (20) between the ventilation opening(s) (22) arranged in the lower region of the door (20) and the ventilation opening(s) (24) arranged in the upper region and forms a flow path for the air current (x, y), which is guided first below the switchgear (34) to the transformer (38) and then via the switchgear (34) to the ventilation opening(s) (24).

2. Transformer station according to claim 1, characterised in that the hood (30) bridges the ventilation opening(s) (22) and its lower hood opening (31) is separated from the switchgear (34) by guiding devices (28, 28a; 32).

3. Transformer station according to claim 1 or claim 2, characterised in that the hood (30) has a guide wall (28) held at a distance from the ventilation opening(s) (22) by a rider strip (27) and side walls (29) added thereto.

4. Transformer station according to one of claims 1 to 3, characterised in that the hood (30) consists of thin sheet and has a bevelled edge (33) all the way round.

5. Transformer station according to one of claims 2 to 4, characterised in that an intermediate sheet (32) acting as a guiding device extends from the lower hood opening (31) to the transformer (38).

6. Transformer station according to one of claims 1 to 5, characterised in that the free cross section of the air path determined by the hood (30) corresponds everywhere at least to that of the ventilation opening(s) (22).

7. Transformer station according to at least one of claims 1 to 6, characterised in that the hood (30) is hinged on to the door (20).

8. Transformer station according to at least one of claims 1 to 6, characterised in that the hood (30) can be detachably hung from the door (20) or from supports (36) for the switchgear (34) or can be secured thereto by means of wing nuts.

9. Transformer station according to at least one of claims 1 to 8, characterised in that the transformer (38) is arranged so that it is lower than the switchgear (34).

## Revendications

1. Sous-station de distribution constituée d'un corps en béton comportant une porte pourvue, aussi bien dans sa partie supérieure que dans sa partie inférieure, d'ouvertures d'entrée de ventilation et de sortie de ventilation, et comportant au moins un commutateur de tension disposé dans l'espace intérieur de la sous-station à proximité de la porte et derrière lequel est posé au moins un transformateur,
caractérisée en ce que
le commutateur de tension (34) est monté à une distance (h) du sol (15) de la sous-station de distribution (10) et en face de la porte (20) dans laquelle sont agencées exclusivement les ouvertures d'entrée de ventilation et de sortie de ventilation (22, 24), et en ce que le guidage du courant de ventilation à l'intérieur de la sous-station de distribution (10) est défini par un capot (30) qui est rapporté sur la porte (20), entre l'ouverture ou les ouvertures d'entrée de ventilation (22) disposée/s dans la partie inférieure de la porte (20) et l'ouverture ou les ouvertures de sortie de ventilation (24) disposée/s dans la partie supérieure, en constituant une trajectoire d'écoulement pour le courant de ventilation (x, y) qui est tout d'abord dirigé vers le transformateur (38) en passant sous le commutateur de tension (34), puis vers l'ouverture ou les ouvertures de sortie de ventilation (24) en passant au-dessus du/des commutateur/s de tension (34).

2. Sous-station de distribution selon la revendication 1, caractérisée en ce que le capot (30) couvre l'ouverture ou les ouvertures d'entrée de ventilation (22) et son ouverture de capot inférieure (31) est séparée des commutateurs de tension (34) par des dispositifs déflecteurs (28, 28m; 32).

3. Sous-station de distribution selon la revendication 1 ou 2, caractérisée en ce que le capot (30) comporte une paroi déflectrice (28) maintenue à distance de l'ouverture ou des ouvertures d'entrée de ventilation (22) par une bande de sommet (27), ainsi que des parois latérales (29) se raccordant à la paroi précédente.

4. Sous-station de distribution selon l'une des revendications 1 à 3, caractérisée en ce que le capot (30) est réalisé en tôle mince et présente sur toute sa périphérie un bord coudé (33).

5. Sous-station de distribution selon l'une des revendications 2 à 4, caractérisée en ce qu'une tôle intermédiaire (32) faisant office de dispositif déflecteur, s'étend de l'ouverture de capot inférieure (31) en direction du transformateur (38).

6. Sous-station de distribution selon l'une des revendications 1 à 5, caractérisée en ce que la section de passage libre définie par le capot (30) et formant le chemin de circulation du courant de ventilation, correspond en tout endroit au moins à celle de l'ouverture ou des ouvertures d'entrée de ventilation (22).

7. Sous-station de distribution selon l'une au moins des revendications 1 à 6, caractérisée en ce que le capot (30) est articulé sur la porte (20).

8. Sous-station de distribution selon l'une au moins des revendications 1 à 6, caractérisée en ce que le capot (30) est monté de manière amovible sur la porte (20) ou sur des supports (36) pour les commutateurs de tension (34) en étant suspendu ou fixé par des écrous à oreilles.

9. Sous-station de distribution selon l'une au moins des revendications 1 à 8, caractérisée en ce que le transformateur (38) est disposé à un niveau inférieur à celui du/des commutateur/s de tension (34).

Fig. 1

Fig. 2

Fig. 3

EP 0 343 356 B1